# EUROPEAN PATENT APPLICATION

(11) **EP 1 975 218 A2**
(43) Date of publication of application: **01.10.2008**
(21) Application number: 08004103.1
(22) Date of filing: 05.03.2008
(51) Int. Cl.: C09K 5/10

(54) **Cooling electronic components**

(30) Priority: 28.03.2007 US 692423
(71) Applicant: GM Global Technology Operations, Inc., Detroit, MI 48265-3000 (US)
(72) Inventor: Mance, Andrew M., Royal Oak Michiogan 48067 (US); Linden, James L., Rochester Hills Michigan 48309 (US)
(74) Representative: Manitz, Finsterwald & Partner GbR

(57) **Abstract**

An illustrative embodiment of the invention provides an electronic power inverter for a traction motor and a coolant for the inverter. The power inverter comprises an aluminum component and the coolant is a non-aqueous dielectric liquid coolant composition including an inhibitor. The coolant consists essentially of a mixture of an oligo-(alkyl siloxane), such as hexamethyldisiloxane, and a monomer or oligomer of an alkyl ether alkylene glycol, such as 1-methoxy-2-propanol, and including an azole in an amount for inhibiting dissolution of the aluminum electronic component.

## Description

### TECHNICAL FIELD

This invention pertains to a non-aqueous coolant composition and a method of inhibiting the corrosion of aluminum electronic components in a cooling system. More specifically, this invention pertains to cooling aluminum electronic components in an environment that is free of water and molecular oxygen.

### BACKGROUND OF THE INVENTION

Many automotive vehicles are powered by electric traction motors where the electrical power is generated on the vehicle by an internal combustion engine or a fuel cell, or provided by a battery. Traction motors are usually most efficient when powered by three-phase alternating current. Usually fuel cells and engine driven generators do not provide three-phase alternating current. An electronic device called a power inverter is often used in close combination with the traction motor to convert direct current or single phase alternating current to three-phase alternating current (AC).

As sometimes used in an automotive vehicle, the circuitry of the power inverter comprises insulated gate bipolar transistors which are usually silicon-containing devices. The transistors and any associated circuit board(s) are often mounted on a direct bonded copper substrate. The power requirements for such a traction motor are substantial and often varying and the power inverter manages substantial electric power and generates heat. The sensitive circuit elements work better if they can be maintained within a fairly constant temperature range. It has been necessary to provide a cooling system for the power inverter that is different and separate from the cooling system for the basic power generating device on the vehicle.

Published U.S. Patent Applications 2006/0174642 A1 and 2006/0174643 A1, assigned to the assignee of this invention, disclose useful cooling arrangements for such integrated combinations of an electronic power inverter and electric motor. These applications disclose the use of a non-aqueous coolant composition for direct contact cooling with the electronic circuitry of the inverter. In these disclosures the electronic components are enclosed within a power inverter compartment that is located close to, or on, the traction motor. The coolant is dielectric so that it does not interfere with the electronic circuitry and it is composed so that it does not react chemically with the copper base and bus bars and the other electronic components. These published applications disclose the use of a dielectric fluid OS-120 (available from Dow Corning), which is a binary mixture of two substances, a relatively inert, low molecular weight silicone, hexamethyldisiloxane, (CH₃)₃SiOSi(CH₃)₃, and an ether alcohol, 1-methoxy-2-propanol, CH₃0CH₂CH(OH)CH₃, (also referred to as propylene glycol methyl ether, or PGME).

This two-component coolant composition is pumped in a closed circuit (typically a molecular oxygen-free and water-free circuit) from a coolant reservoir into contact with the electrical components and through its own cooling system where inverter component heat is discharged. The circulating coolant is maintained at a temperature range below the desired operating temperature of critical inverter components. The coolant is often sprayed on the electrical components to cool them by conductive contact. Typically some coolant may be vaporized thus increasing the heat removing capability of the coolant. The coolant itself may be cooled in a separate part of the cooling circuit by heat transfer with the cooling system for the vehicle engine, fuel cell, or the like.

The OS-120 material does not react with copper and other materials of the inverter circuitry even though the coolant is usually at its boiling point (about 95°C to about 100°C) and vaporizing on the surfaces of the circuit elements. However, there is interest in using aluminum in the construction of the inverter enclosure because of its low weight and in the inverter circuitry because of its high electrical conductivity. While the disiloxane-ether alcohol mixture is an effective coolant for the present inverter circuitry, it tends to dissolve aluminum. Such dissolution can occur in quiescent contact and is aggravated by vehicle vibrations and cavitation by vaporizing coolant. Accordingly, there is a need to devise a suitable coolant composition for use in aluminum-containing power inverters.

A challenge is to discover a siloxane-ether alcohol coolant and inhibitor combination that is stable and effective in an operating vehicle coolant circuit environment that is substantially free of molecular oxygen and water.

Frequently, aluminum is protected from degradation by the application of a chromate conversion coating to the oxide layer. The chromate coating acts by absorbing onto the surface making it less accessible for further reaction. It has been shown that chromate will be released from the coating and migrate to areas where the oxide has been damaged, thus acting as a self-sealing system and minimizing damage to the surface. For environmental reasons, however, chromate coatings are to be avoided in automotive applications.

### SUMMARY OF THE INVENTION

It has been discovered that suitable mixtures of oligo-(alkyl siloxanes) and alkyl ether alkylene glycols may be used to cool aluminum-containing power inverter circuitry for vehicle traction motors, and the like, with the incorporation of suitable inhibitor compounds that are dispersed in the circulating and vaporizing coolant. These inhibitors must be compatible with both the non-aqueous two-component coolant composition and the aluminum-containing inverter circuit elements.

In general, a useful dielectric coolant is a suitable liquid mixture of a low molecular weight siloxane and an ether alcohol. Liquid oligomers of lower alkyl siloxanes are suitable as are liquid monomers or oligomers of lower alkyl ethers of lower alkylene glycols. These constituents are formulated so that the oligo alkyl siloxane contributes dielectric inertness to the liquid coolant mixture and the monomer or oligomer of an alkyl ether alkylene glycol contributes heat absorption capacity. It is usually preferred that the mixture has an atmospheric pressure boiling point of about 95°C to about 100°C to suitably control the usual operating temperature range of the inverter circuitry. Hexamethyldisiloxane, (CH₃)₃SiOSi(CH₃)₃, and 1-methoxy-2-propanol, CH₃OCH₂CH(OH)CH₃, are examples of preferred coolant constituents. But other lower alkyl analogs of these compounds may be used. A preferred coolant typically comprises about ten to thirty percent by weight of the alkyl ether alkylene glycol and the balance oligo alkyl siloxane.

Certain five-member ring heterocyclic organic compounds have been found to be dispersible in the binary composition coolant over a wide operating temperature range and to be effective in preventing corrosive attack of aluminum electronic components. The five member rings include three nitrogen atoms, or a combination of a nitrogen atom and sulfur atom, with the carbon atoms. Benzotriazole and 5-methyl-1H-benzotriazole are examples of such suitable heterocyclic compounds containing three nitrogen atoms in the base heterocyclic ring. 2-Mercaptobenzothiazole is a suitable inhibitor having a nitrogen atom and a sulfur atom in the base ring. These materials may sometimes be referred to as "azoles" in this specification.

These five-member heterocyclic ring compound inhibitors are dispersed or dissolved in the oligo-alkylsiloxane-alkyl ether alkylene glycol coolant and remain dispersed as the coolant is circulated and performing its coolant function, despite the temperature fluctuations of the coolant and its vaporization on the surface of the hot aluminum electronic components. The inhibitors are used in relatively small but suitable amounts. The above identified azoles have been found to be effective in concentrations of about two to ten millimoles per liter of dielectric coolant.

Other objects and advantages of the invention will become more apparent from a detailed description of preferred embodiments which follows.

### BRIEF DESCRIPTION OF THE DRAWINGS

Figure 1 is a schematic outline view of an automotive vehicle illustrating gas-electric hybrid drive components including a power inverter;

Figure 2 is a schematic view of an embodiment of a cooling system for cooling inverter components coupled to the electric traction motors of Figure 1.

### DESCRIPTION OF PREFERRED EMBODIMENTS

A first embodiment of the invention provides a coolant composition that can be used to cool aluminum-containing electronic components. The coolant is a dielectric liquid that includes a liquid alkyl siloxane component and a liquid alkyl ether alkyl glycol component. Suitably the siloxane is an alkyl siloxane oligomer, e.g., dimethyl siloxane or trimethyl siloxane, and the ether glycol is a monomer or oligomer of an alkyl ether alkylene glycol. The liquid mixture comprises about two to about ten millimoles of a suitable azole per liter of the non-aqueous dielectric fluid. The azole is a corrosion inhibitor component in the coolant composition. For example, the azole may be selected from the group consisting of thiazole, 2-mercaptobenzothiazole, triazole, benzotriazole, and 5-methyl-1H-benzotriazole. In a preferred embodiment, the non-aqueous dielectric fluid may comprise a mixture of hexamethyldisiloxane and propylene glycol methyl ether.

Another embodiment of the invention provides a method comprising providing a non-aqueous, dielectric coolant composition comprising about two to about ten millimoles of a suitable azole per liter of non-aqueous dielectric fluid; and circulating the coolant between a coolant reservoir and an aluminum-containing electronic component in a coolant circuit that is substantially free of water and molecular oxygen. The circulating coolant may be sprayed as liquid droplets or as a mist onto the circuit components, or it may be delivered in a full stream for flooding or immersing the circuit components to cool them. The azole may be selected from the group consisting of thiazole, 2-mercaptobenzothiazole, triazole, benzotriazole, and 5-methyl-1H-benzotriazole. The non-aqueous dielectric fluid may comprise a mixture of hexamethyldisiloxane and propylene glycol methyl ether.

In other embodiments, the coolant composition is used in spray cooling for power electronics in a hybrid vehicle. For example, power electronics may include power transistors with an aluminum-containing substrate or circuit element container. In another embodiment, the composition is used in spray cooling for an inverter in a hybrid vehicle. In another embodiment, the coolant fluid may be used in the cooling arrangements of U.S. Patent Application Publication 2006/0174642 A1 and U.S. Patent Application Publication 2006/0174643 A1.

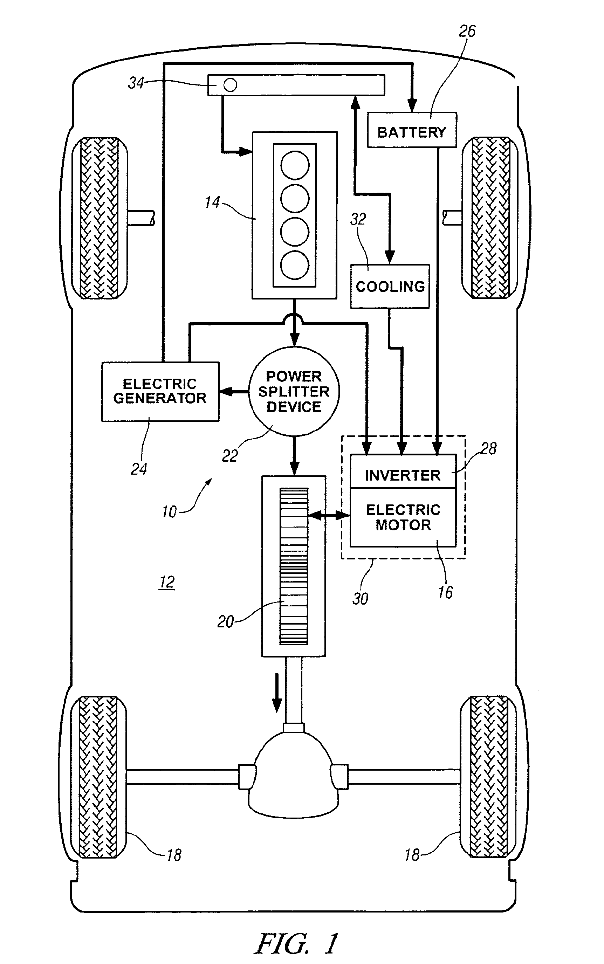

Referring now to Figure 1, there is shown an example of a gas-electric drive 10 for powering a vehicle 12 utilizing an internal combustion engine 14 and an electric traction motor 16 to drive wheels 18 of the vehicle through a transmission 20. The gas-electric hybrid drive 10 may use a gasoline engine, a diesel engine, a turbine engine or any other engine configuration. A power splitter 22 determines whether the internal combustion engine 14 or the electric motor 16 drives the transmission 20, or whether the transmission 20 or internal combustion engine drives an electric generator 24. In another embodiment, the generator 24 is mounted next to the electric traction motor 16 and cooled with the same arrangement as the traction motor. The electric generator 24 charges a battery 26 and/or provides current to an inverter 28 that delivers current to the electric traction motor 16. In accordance with the present invention, the electric traction motor 16 and inverter 28 are configured as a modular unit 30. This provides an opportunity for a reduction in the space consumed by the electric traction motor 16 and inverter 28. Since the inverter 28 generates heat, the inverter requires a cooling arrangement 32. In accordance with one aspect of the present invention, the cooling arrangement 32 has a sealed cooling circuit which is coupled thermally to a radiator 34 which cools the internal combustion engine 14. The cooling arrangement 32 may be remote from the module 30, as shown in Figure 1, or the cooling arrangement 32 may be integral with the module 30.

In another embodiment, the electric traction motor 16 is powered by a fuel cell. The fuel cell may be connected either directly or through a battery pack to the inverter 28 for the motor 16. The cooling arrangement 32 is used to cool the fuel cell.

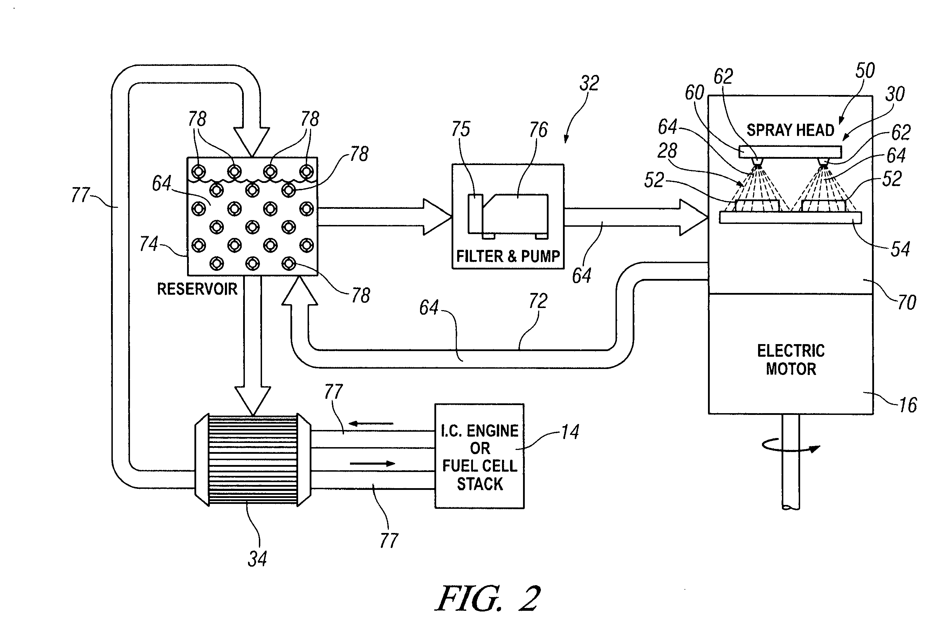

Figure 2 illustrates one embodiment of the cooling system 32. The inverter 28 may be positioned within a compartment 50 (contained, e.g., in an aluminum enclosure) which is disposed adjacent to the electric motor 16. The inverter 28 may include insulated gate bipolar transistors (IGBTs) 52 which are bonded with a direct bonded substrate 54 (e.g., an aluminum-containing substrate) that is integrated with an AC/DC bus to form an inverter circuit. The IGBT 52 may be cooled by a coolant dispenser 60 which has spray nozzles 62 that dispense coolant composition 64 in liquid form directly on the IGBTs 52 and the associated substrate 54 and bus. While the illustrated embodiment sprays the coolant 64 as liquid droplets, in other embodiments the coolant is dispensed in stream form or flooded over the inverter 28. In still another embodiment, the inverter 28 is immersed in the coolant composition 64, but preferably the coolant composition 64 is sprayed as a mist or in discreet droplets onto the inverter 28.

By using the coolant dispenser 60, coolant composition 64 is applied directly to the source of heat of the IGBT 52, which allows the power density (power per unit volume) of the motor inverter 28 to be increased. To be cooled by the coolant composition 64, heat generated by the IGBT 52 need not travel through multiple layers of materials, a few of which have low thermal conductivity. Rather, a direct thermal path provided by spray cooling reduces the temperature of the IGBT 52. With lower temperature for the IGBT 52, increased power is available through the inverter 28 to the traction motor 16. Alternatively, with improved cooling a smaller inverter 28 may be provided to produce the same power level for the traction motor 16.

The spray cooling provided by the spray nozzles 62 is also usable on other components associated with the inverter 28, such as capacitors, transformers, integrated circuits and bus bars that are temperature sensitive. The spray cooling provides cooling to wire bonds between the elements of the IGBT 52 and prevents wire bonds from overheating, consequently helping to minimize failure. Accordingly, along with the resulting reduction of component temperatures, improved reliability is provided.

Because spray cooling provides increased cooling capacity, spray cooling improves resistance of the inverter 28 to transient power fluctuations. Transient power fluctuations exist on the input to the power inverter 28 due to sudden increases in power demanded by the vehicle 12 for short periods of time. The fluctuations can be caused by increased resistance to the output of the motor 16 which in turn cause temperature increases in the IGBT 52. By having direct application of the cooling composition 64 to the IGBT 52, temperature change is reduced in both time duration and temperature increase.

Referring again to Figure 2, the coolant composition 64 is sprayed as a liquid and is collected in a sump portion 70 of the compartment 50 and through a spray return 72 to a reservoir 74 which is connected through a filter 75 to a pump 76. The pump 76 is connected to the dispenser 60 that supplies recycled coolant to the spray nozzles 62 for continued cooling of the inverter 28. While the coolant composition 64 is circulating through the reservoir 74, it is cooled by a second coolant 77, such as a water and ethylene glycol solution, which flows through tubes 78 in the reservoir 74. The second coolant 77 is supplied by the radiator 34, which cools the internal combustion engine 14 of Figure 1. The pump 76 is preferably a variable speed pump which is controlled by the output of the IGBTs 52. As the output of the IGBTs 52 increases, the speed of the pump 76 increases which increases the amount of coolant composition 64 sprayed through spray nozzles 62. Alternatively, the temperature of the IGBT 52 may be monitored with a thermocouple arrangement with the speed of the pump 76 being increased as the temperature of the IGBT increases to spray more coolant and thereby decrease the temperature of the IGBT.

The following examples are provided to illustrate various embodiments of the invention. However, the examples which follow do not restrict the invention.

It was a challenge to identify candidate inhibitor materials that were compatible with and dispersible in the non-aqueous coolant composition and were effective in inhibiting coolant attack on aluminum under the relatively high temperatures at which the cooling system operates. The following inhibitors were found to be useful in this critical environment by tests such as the following tests.

Several corrosion inhibitors were tested on aluminum pellets. Table 1 lists selected corrosion inhibitors, the source of the chemical, the purity, the amount used (g), and the amount used (mmole). The corrosion inhibitors were mixed with the non-aqueous dielectric fluid OS-120 (available from Dow Corning), which is a binary mixture of two liquid compounds; a relatively inert, low molecular weight silicone, hexamethyldisiloxane, (CH₃)₃SiOSi(CH₃)₃, and an ether alcohol, 1-methoxy-2-propanol, CH₃OCH₂CH(OH)CH₃ (also referred to as propylene glycol methyl ether, or PGME). The aluminum pellets used in the tests were AlfaAesar Puratronic^{®} grade, 99.999% (metal basis) aluminum shot (4-8mm).

**Table 1. Suitable Corrosion inhibitors**

| **Corrosion inhibitor** | **Source** | **Purity** | **Amount used (g)** | **Concentration (mmole/L)** |
|---|---|---|---|---|
| 2-mercaptobenzothiazole | AlfaAesar | 97% | 0.05 | 3 |
| 5-methyl-1H-benzotriazole | TCI America | 99% | 0.05 | 3 |
| Benzotriazole | AlfaAesar | 99% | 0.05 | 4 |

The corrosion test procedure is as follows. The non-aqueous dielectric fluid OS-120 was dried over molecular sieves for several days then deoxygenated by sparging with dry nitrogen gas. Then the OS-120 was filtered through 0.2 µm porosity Teflon® filters to remove any residual particulates. Next, 20 mL of the dried, deoxygenated OS-120 was combined, in a bottle, under nitrogen, with each of the weighed corrosion inhibitors in the quantities given in Table 1. After about 20 minutes on a shaker, the mixtures of OS-120 and the corrosion inhibitors were poured into 250 mL round bottom flasks. Any remaining contents of the bottles were washed into the flask with an additional 80 mL of OS-120. The flasks contained an egg-shaped Teflon-coated magnetic stirring bar and a pre-weighed aluminum pellet. The flasks and their contents were attached, using their 24/40 ground glass joints, to condensers for refluxing. The 24/40 ground glass joints were protected against seizing through the use of Teflon® sleeves, no grease was employed on the joints. The condensers had been flushed with dry nitrogen.

A digitally controlled stirrer was set at 240 rpm on one of the set-ups and the other stirrers were adjusted to approximately the same spin rate. These test solutions were then refluxed under nitrogen at ambient pressure. Heat was applied so that the boiling was very gentle. The flasks and condensers were periodically raised above the stirring units and heating mantles to allow visual inspection of the aluminum pellet. Testing ended after 10 days.

The results of these corrosion tests are provided in Table 2. The aluminum mass loss of "none" indicates that the aluminum pellet appeared pristine with no pitting or signs of degradation evident upon visual inspection

**Table 2. Results after refluxing with aluminum pellets**

| **Mixture** | **Inhibitor Solubility in 100 mL OS-120** | **Reflux Time** | **Aluminum pellet mass loss** |
|---|---|---|---|
| OS-120 (control test) | N/A | 9 hours | Complete dissolution (oxidation) without clouding. |
| 2-mercaptobenzothiazole and OS-120 | soluble | 10 days | none |
| 5-methyl-1H-benzotriazole and OS-120 | Dissolved only upon boiling, but stayed in solution after cooling | 10 days | none |
| benzotriazole and OS-120 | soluble | 10 days | none |

As a result of the corrosion testing, it was found that suitable thiazoles and triazoles are effective corrosion inhibitors when mixed with OS-120.

While the invention has been described in terms of preferred embodiments, it will be appreciated that other forms of the process could be radially adapted by one skilled in the art. The scope of the invention is intended to be limited only by the following claims.

## Claims

1. A combination of an electronic power inverter and liquid dielectric coolant composition for the power inverter, the power inverter comprising an aluminum component, the coolant composition comprising a liquid mixture of an oligo-(alkyl siloxane) and a monomer or oligomer of an alkyl ether alkylene glycol and including an azole dispersed in the liquid mixture in an amount for inhibiting dissolution of the aluminum component.

2. A combination of an electronic power inverter and liquid dielectric coolant composition for the power inverter as recited in claim 1 in which the coolant composition liquid mixture has an atmospheric pressure boiling point in the range of about 95°C to about 100°C

3. A combination of an electronic power inverter and liquid dielectric coolant composition for the power inverter as recited in claim 1 in which the coolant composition liquid mixture consists essentially of a mixture of hexamethyldisiloxane and 1-methoxy-2-propanol.

4. A combination of an electronic power inverter and liquid dielectric coolant composition for the power inverter of claim 1 wherein the azole dispersed in the liquid mixture is selected from the group consisting of thiazole, 2-mercaptobenzothiazole, triazole, benzotriazole, and 5-methyl-1H-benzotriazole.

5. A combination of an electronic power inverter and liquid dielectric coolant composition for the power inverter of claim 1 wherein the concentration of the azole inhibitor dispersed in the liquid mixture is about two to ten millimoles per liter of the liquid mixture.

6. A dielectric liquid coolant composition for direct contact cooling of an electronic power inverter comprising an aluminum component, the coolant composition comprising a liquid mixture of an oligo-(alkyl siloxane) and a monomer or oligomer of an alkyl ether alkylene glycol and including an azole dispersed in the liquid mixture in an amount for inhibiting dissolution of the aluminum component.

7. A dielectric liquid coolant composition as recited in claim 6 in which the coolant composition liquid mixture has an atmospheric pressure boiling point in the range of about 95°C to about 100°C.

8. A dielectric liquid coolant composition as recited in claim 6 in which the coolant composition liquid mixture consists essentially of a mixture of hexamethyldisiloxane and 1-methoxy-2-propanol having an atmospheric pressure boiling point in the range of about 95°C to about 100°C.

9. A dielectric coolant composition as recited in claim 6 wherein the concentration of the azole inhibitor is about two to one ten millimoles per liter of the liquid mixture.

10. A dielectric coolant composition as recited in claim 6 wherein the azole is selected from the group consisting of thiazole, 2-mercaptobenzothiazole, triazole, benzotriazole, and 5-methyl-1H-benzotriazole.

11. A method of cooling an electronic power inverter for an electric traction motor on an automotive vehicle for driving at least one wheel of the vehicle, where the electronic power inverter comprises an aluminum-containing component, the method comprising:
circulating a non-aqueous liquid, dielectric coolant composition between a coolant reservoir and the aluminum component in a coolant circuit that is substantially free of water and molecular oxygen, the coolant composition consisting essentially of a liquid mixture of an oligo-(alkyl siloxane) and a monomer or oligomer of an alkyl ether alkylene glycol, and including an azole dispersed in the liquid mixture in an amount for inhibiting dissolution of the aluminum component.

12. A method of cooling an electronic power inverter for an electric traction motor as recited in claim 11 in which the dielectric coolant composition is sprayed onto the aluminum containing component.

13. A method of cooling an electronic power inverter for an electric traction motor as recited in claim 11 in which the aluminum containing component is immersed in or flooded with the dielectric coolant composition.

14. A method of cooling an electronic power inverter for an electric traction motor as recited in claim 11 in which the concentration of the azole inhibitor dispersed in the liquid mixture is about two to ten millimoles per liter.

15. A method of cooling an electronic power inverter for an electric traction motor as recited in claim 11 in which the azole inhibitor is selected from the group consisting of thiazole, 2-mercaptobenzothiazole, triazole, benzotriazole, and 5-methyl-1H-benzotriazole.

16. A method of cooling an electronic power inverter for an electric traction motor as recited in claim 11 in which the coolant composition liquid mixture has an atmospheric pressure boiling point in the range of about 95°C to about 100°C.

17. A method of cooling an electronic power inverter for an electric traction motor as recited in claim 11 in which the coolant composition liquid mixture consists essentially of a mixture of hexamethyldisiloxane and 1-methoxy-2-propanol having an atmospheric pressure boiling point in the range of about 95°C to about 100°C.
